# EUROPÄISCHE PATENTSCHRIFT

(11) **EP 2 742 255 B1**
(45) Veröffentlichungstag und Bekanntmachung des Hinweises auf die Patenterteilung: **07.03.2018**
(21) Anmeldenummer: 12734795.3
(22) Anmeldetag: 14.06.2012
(51) Int. Cl.: B60G 11/27, B60G 17/052, F16F 9/05

(54) **LUFTFEDER FÜR FAHRZEUGE**
AIR SPRING FOR VEHICLES
RESSORT PNEUMATIQUE POUR VÉHICULES

(30) Priorität: 08.08.2011 DE 102011109674
(43) Veröffentlichungstag der Anmeldung: 18.06.2014
(73) Patentinhaber: Vibracoustic CV Air Springs GmbH, 20099 Hamburg (DE)
(72) Erfinder: DEHLWES, Stephan, 22844 Norderstedt (DE); DREVES, Jonny, 21465 Reinbek (DE)
(74) Vertreter: Flügel Preissner Schober Seidel
(86) Internationale Anmeldenummer: PCT/EP2012/002512
(87) Internationale Veröffentlichungsnummer: WO 2013/020614

(56) Entgegenhaltungen:
- DE-C1- 10 111 242
- US-A- 3 876 193
- US-A- 4 718 650

## Beschreibung

### Technisches Gebiet

Die Erfindung befasst sich mit der Ausbildung einer Luftfeder für Fahrzeuge, bei der ein großer Federweg bei gleichzeitig geringem Bauraum realisiert werden kann. Die Luftfeder soll einen einfachen Aufbau haben und eine kostengünstige Fertigung erlauben. Gleichzeitig soll die Luftfeder für Nutzfahrzeuge einsetzbar sein und eine Erhöhung bzw. Absenkung der Niveaulage des Fahrzeugs erlauben.

### Darstellung der Erfindung

Die Lösung der gestellten Aufgabe wird mit den Merkmalen des Anspruchs 1 erreicht. Die Unteransprüche 2 bis 12 stellen vorteilhafte Weiterbildungen des Erfindungsgegenstandes dar.

Um den bei Nutzfahrzeugen gewünschten Liftvorgang mit einer Luftfeder zu verwirklichen, wird dieselbe mit zwei sich gegenüber liegenden Abrollkolben und einem einen Druckluftraum einschließenden Rollbalg mit Doppelrollfalten verwirklicht. Dabei werden die druckwirksamen Flächen der Abrollfalten der Abrollkolben so aufeinander abgestimmt, dass während des dynamischen Federvorgangs der Luftfeder über einen vorgegebenen Federweg die wirksame Fläche DW2 der Abrollfalte am unteren Abrollkolben größer ist als die wirksame Fläche DW3 der Abrollfalte am oberen Abrollkolben, dass bei Erreichen der vorgegebenen vollen Ausfederung der Luftfeder die druckwirksamen Flächen der Rollfalten etwa gleich groß sind und dass während des Liftvorgangs im Anschluss an die volle Ausfederung durch Drucklufterhöhung im Druckluftraum der Luftfeder die obere Rollfalte am oberen Abrollkolben abrollt. Hierdurch wird gewährleistet, dass über den vorgegebenen Federweg der Luftfeder nur die am unteren Abrollkolben anliegende Abrollfalte während des Federvorgangs am Abrollkolben abrollt, während die Abrollfalte am oberen Abrollkolben in einer Anlagefläche am oberen Kolben verbleibt. Während des Federvorgangs findet bei beiden Rollfalten eine Veränderung des druckwirksamen Durchmessers statt, so dass bei voller Ausfederung die druckwirksamen Flächen der Rollfalten etwa gleich groß sind. Wenn in dieser Lage eine Drucklufterhöhung im Druckluftraum der Luftfeder stattfindet, wird der Liftvorgang initiiert und die obere Rollfalte rollt am oberen Abrollkolben ab, bis der Liftvorgang beendet ist. Eine Absenkung des Fahrzeugaufbaus erfolgt dadurch, dass Druckluft aus dem Druckluftraum abgelassen wird, wodurch zunächst die obere Rollfalte in ihre Ausgangsposition zurückkehrt und danach der Federvorgang der Luftfeder durch die untere Rollfalte wieder übernommen wird.

Bei Luftfedern für den Pkw-Gebrauch ist die Verwendung von Rollbälgen mit Doppelrollfalten an sich bekannt. Hierzu wird beispielsweise auf die EP 1 239 181 A2 verwiesen. Bei der dort beschriebenen Ausführungsform ist jedoch nur ein Abrollkolben für die untere Abrollfalte vorgesehen. Die obere Abrollfalte liegt in einer Aussparung am Deckel der Luftfeder an und hat allein den Zweck, eine Verschwenkbarkeit der Luftfeder zu dem mit ihr verbundenen Stoßdämpfer zu ermöglichen.

Eine weitere Möglichkeit, bei der eine Luftfeder mit Doppelrollfalten zur Anwendung kommt, ist in der EP 1 171 722 B1 behandelt. Bei der gezeigten Ausführungsform rollt die untere Rollfalte an einem zylindrischen Abrollkolben ab, während die obere Rollfalte an einer konisch verlaufenden Abrollfläche am Deckel der Luftfeder eine geringe Abrollbewegung durchführen kann. Diese Anordnung von Kolben und Deckel sowie der Doppelrollfalte soll eine Verbesserung der Komforteigenschaften bei Verwendung einer Luftfeder ergeben.

Die Verwendung von zwei sich gegenüberliegenden Kolben und eines Rollbalgs mit Doppelrollfalten ist in der Fig. 9 der DE 1 107 030 gezeigt. Es sind zwei gleich große Abrollkolben für die Rollfalten vorgesehen, so dass diese Ausführungsform nur für Federzwecke einsetzbar ist. Diese Aussage trifft auch auf die Ausführungsform in der US 3,876,193 zu, bei der die Rollfalten allein für Federzwecke eingesetzt werden. Während der Federung bewegen sich beide Rollfalten gleichzeitig.

Schließlich zeigt die US 4,718,650 eine Luftfeder, die beim Einfedervorgang einen sehr geringen Raum benötigt, da die Kolbenwand des unteren Kolbens in einen Freiraum am oberen Kolben teleskopartig einfügbar ist, wenn die Luftfeder in ihrer Minimal-Position zusammengedrückt ist. Die Luftfeder kann so weit ausgezogen werden, dass sich die untere Rollfalte vollständig vom unteren Abrollkolben löst und auch die obere Rollfalte aus der Aufnahme herausgezogen wird. Der die obere Rollfalte bildende Teil des Rollbalgs ist jedoch mit einer Einfassung versehen, die ein Zurückrollen der oberen Rollfalte in ihre Ausgangsposition verhindert. Eine Druckminderung im Druckluftraum allein kann nach der vorliegenden Konstruktion nicht dazu führen, dass die Rollfalte in ihre Ausgangsposition zurückkehrt. Erst der obere Rand des unteren Rollkolbens kann die obere Rollfalte zurückdrücken, was jedoch nicht zu einem vollständigen Anlegen der Rollfalte führt, sondem es bleiben Lufträume. Diese Konstruktion ist folglich nicht geeignet, einen reibungslosen Ablauf eines Liftvorgangs zu verwirklichen.

Bei der vorliegenden Erfindung wird der untere Abrollkolben bevorzugt mit einer zylindrischen Außenfläche versehen, an der die untere Abrollfalte bei einem Federvorgang ungehindert abrollen kann. Der obere Abrollkolben dagegen hat einen Abschnitt mit einer zylindrischen Außenfläche und einen daran anschließenden konkaven Sockel. An diesem Sockel liegt die Abrollfalte zumindest hälftig an. Der konkave Sockel hat einen Kreisbogen von ca. 90° Grad, was eine entsprechende Anlage der oberen Abrollfalte ermöglicht. Während des Federvorgangs bleibt die obere Rollfalte am Sockel.

Der Kolben kann ohne Deckelabschluss ausgeführt werden, so dass ein die Federung begünstigender großer Druckluftraum zur Verfügung steht. Alternativ kann bei kleineren Kolben der Kolben auch mit Deckelabschluss ausgeführt werden. Bei fehlendem Deckel am unteren Abrollkolben kann der obere Abrollkolben in den unteren Abrollkolben eintauchen.

Die Enden des Rollbalgs sind an den einander zugewandten inneren Rändern der Abrollkolben befestigt. Bevorzugt wird ein Rollbalg in Form eines Schlauchrollbalgs verwendet. Dieser kann im Hinblick auf die unterschiedlichen Durchmesser der Rollkolben konisch vorgeformt sein. Zur Vereinfachung der Fertigung trägt auch bei, dass die Kolben aus tiefgezogenen Blechen geformt sind.

### Kurzbeschreibung der Zeichnung

Anhand eines in der Zeichnung dargestellten Ausführungsbeispiels wird die Erfindung nachstehend näher erläutert.

Es zeigt in schematischer Darstellung:
- Fig. 1: einen Schnitt durch die Luftfeder in ihrer Neutral-Stellung;
- Fig. 2: die Luftfeder nach Fig. 1 in ihrer voll eingefederten Stellung;
- Fig. 3: die Luftfeder nach Fig. 1 in voll ausgefederter Stellung;
- Fig. 4: die Luftfeder in gelifteter Stellung und
- Fig. 5, 6, 7: eine Luftfeder hergestellt aus tiefgezogenen Blechen in ihrer Neutral-Stellung, voll eingefederten Stellung und voll ausgefederten Stellung.

### Ausführung der Erfindung

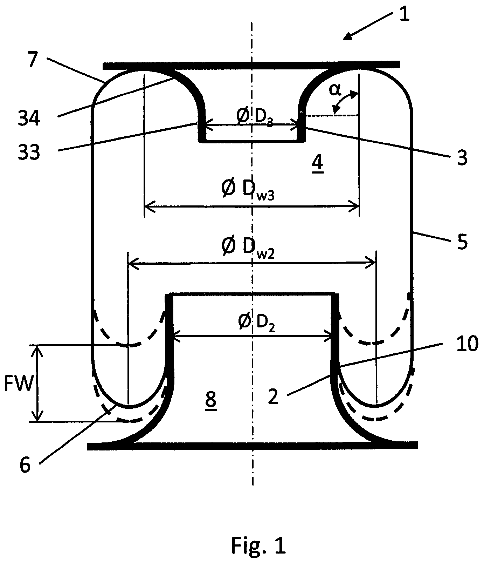

Die Fig. 1 zeigt in schematischer Darstellung die Luftfeder 1 in ihrer Null-Lage. Die Luftfeder 1 ist mit dem unteren Abrollkolben 2 und dem oberen Abrollkolben 3 versehen. Durch den Rollbalg 5 wird der Druckluftraum 4 umschlossen. Der Rollbalg 5 hat die Doppelrollfalten 6 und 7. Die wirksamen Durchmesser der Abrollfalten 6 und 7 sind mit DW2 und DW3 bezeichnet. Hieraus errechnen sich die druckwirksamen Flächen WF2 und WF3 der Abrollfalten 6 und 7. Die wirksamen Durchmesser DW2 und DW3 und damit die wirksamen Flächen WF2 und WF3 der Abrollfalten 6 und 7 sind so aufeinander abgestimmt, dass der Federvorgang der Luftfeder 1 innerhalb des vorgegebenen Federwegs FW erfolgt und zwar lediglich an der Abrollfalte 6 am Abrollkolben 2. Der Federweg FW und die dabei erreichten Positionen der Rollfalte 6 sind gestrichelt eingezeichnet.

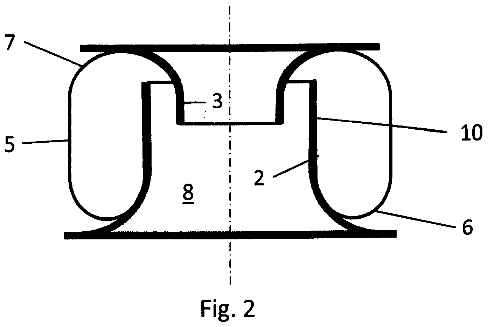

Der Außendurchmesser D2 des unteren Abrollkolbens 2 ist größer als der Außendurchmesser D3 des oberen Abrollkolbens 3. Zumindest der untere Abrollkolben 2 hat zum Druckluftraum 4 keine Abdeckung, so dass bei einem größeren Einfedern der obere Abrollkolben 3 in das Innere des unteren Abrollkolbens 2 eintauchen kann. Diese Möglichkeit ist in der Fig. 2 gezeigt, bei der der obere Abrollkolben 3 in seiner voll eingefederten Stellung mit Bezug auf den unteren Abrollkolben 2 gezeigt ist.

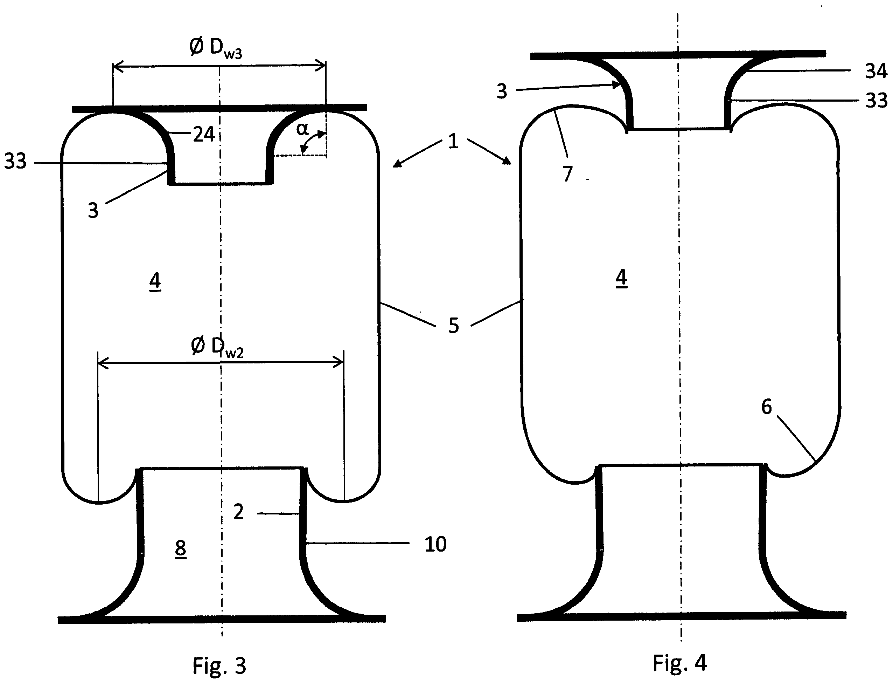

In der Fig. 3 ist die Luftfeder 1 in voll ausgefederter Lage gezeigt. Da im vorliegenden Beispiel der untere Abrollkolben 2 eine zylindrische Außenfläche 10 hat, bleibt der druckwirksame Durchmesser DW2 während des gesamten Abrollvorgangs der Abrollfalte 6 gleich. Ebenso bleibt der druckwirksame Durchmesser DW3 an der oberen Rollfalte 7 unverändert. Das hat zur Folge, dass während des gesamten Federvorgangs die Rollfalte 7 unverändert am oberen Abrollkolben 3 fest anliegt. Der obere Abrollkolben 3 hat einen Abschnitt 33 mit einer zylindrischen Außenfläche und einen daran anschließenden konkaven Sockel 34. Der konkave Sockel 34 ist als Kreisbogen mit einem Winkel ∝von mindestens 90°Grad ausgeführt.

Der Liftvorgang wird durchgeführt nachdem die Luftfeder 1 voll ausgefedert ist, wie in Fig. 3 gezeigt, indem Druckluft in den Druckluftraum 4 eingeleitet wird. Die Einrichtungen für die Druckluftzufuhr bzw. den Druckluftablass in den Druckluftraum 4 sind nicht näher gezeigt, da sie bekannter Bauweise sind. In der Fig. 4 ist die Luftfeder 1 in ihrer gelifteten Stellung gezeigt. Während des Liftvorgangs nähern sich die wirksamen Durchmesser DW2 und DW3 einander an, was den Abrollvorgang am oberen Abrollkolben 3 erleichtert.

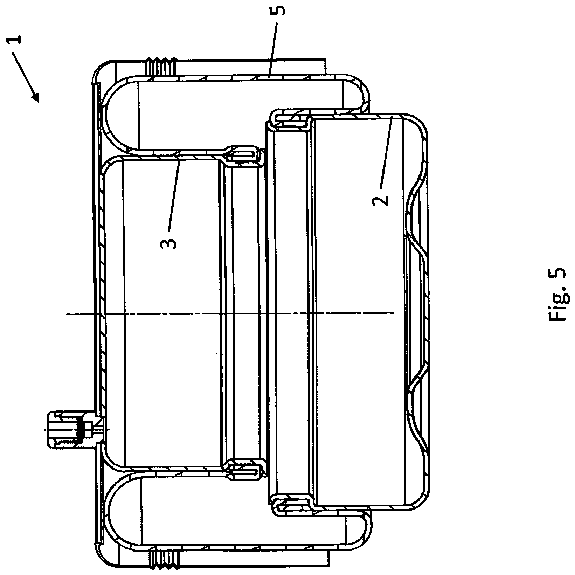

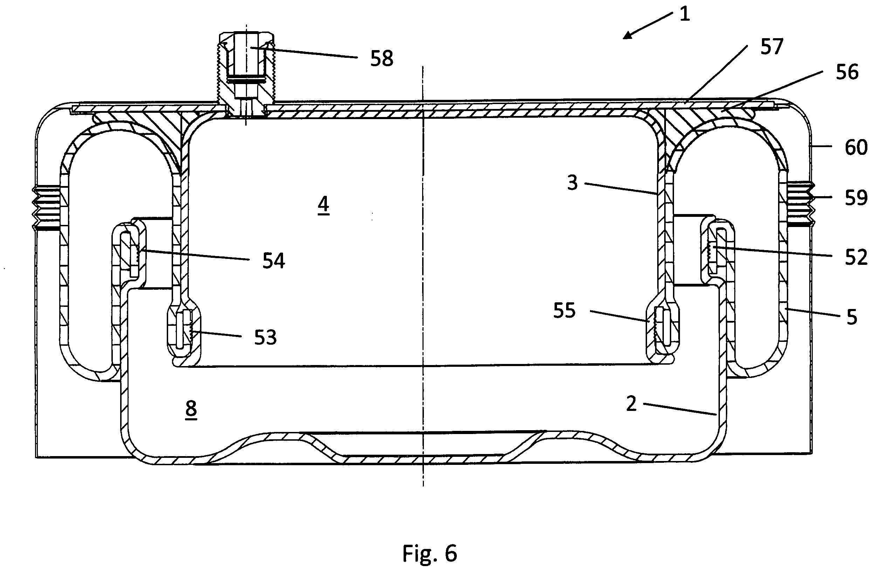

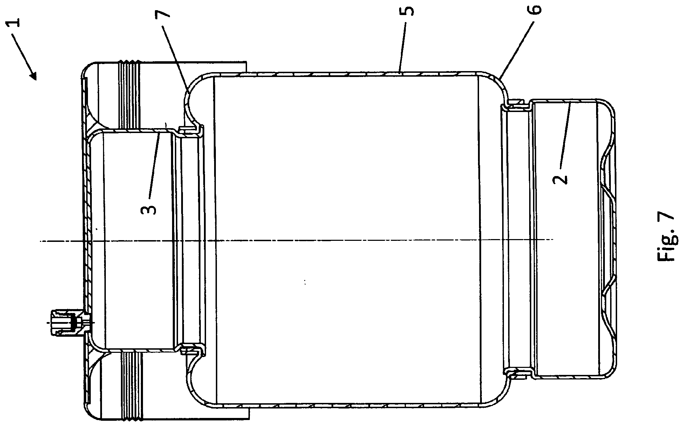

In den Fig. 5, 6 und 7 ist eine Ausführungsform der Luftfeder 1 gezeigt, bei der die Abrollkolben 2 und 3 aus tiefgezogenen Blechen geformt sind. Als Rollbalg 5 wird ein Schlauchrollbalg verwendet, der konisch vorgeformt ist und dessen Enden 52 und 53 an den einander zugewandten inneren Rändern 54 und 55 der Abrollkolben 2 und 3 befestigt sind. Der konkave Sockel 34 am oberen Abrollkolben 3 wird durch einen Einsatz 56 gebildet, der an einem Verstärkungsblech 57 des oberen Abrollkolbens 3 angebracht ist. Der Winkel α des Sockels 34 beträgt hier ca. 100°Grad. Am oberen Abrollkolben 3 ist darüber hinaus ein Druckluftventil 58 für die Zufuhr bzw. das Ablassen der Druckluft aus dem Druckluftraum 4 vorgesehen. Darüber hinaus ist am Versteifungsblech 57 noch eine Schutzhaube 60 vorgesehen, die zumindest teilweise als Faltenbalg 59 ausgebildet ist. In der Fig. 5 ist die Luftfeder 1 in ihrer neutralen Lage dargestellt. Die Fig. 6 zeigt sie in voll eingefederter Lage, während die Fig. 7 die Luftfeder in gelifteter Stellung wiedergibt.

## Patentansprüche

1. Luftfeder (1) für ein Fahrzeug, insbesondere ein Nutzfahrzeug, mit einer Liftfunktion, wobei die Luftfeder (1) aus zwei sich gegenüberliegenden Abrollkolben (2, 3) und einem einen Druckluftraum (4) einschließenden Rollbalg (5) mit Doppelrollfalten (6, 7) besteht, **dadurch gekennzeichnet, dass** die wirksamen Flächen (WF2 und WF3) der Abrollfalten (6, 7) so aufeinander abgestimmt sind, dass während des dynamischen Federvorgangs der Luftfeder (1) über einen vorgegebenen Federweg (FW) die druckwirksame Fläche (WF2) der Abrollfalte (6) am unteren Abrollkolben (2) größer ist als die druckwirksame Fläche (WF3) der Abrollfalte (7) am oberen Abrollkolben (3), dass bei Erreichen der vorgegebenen vollen Ausfederung der Luftfeder (1) die druckwirksamen Flächen (WF2 und WF3) der Rollfalten (6, 7) etwa gleich groß sind und dass während des Liftvorgangs im Anschluss an die volle Ausfederung durch Drucklufterhöhung im Druckluftraum (4) der Luftfeder (1) die obere Rollfalte (7) am oberen Abrollkolben (3) abrollt.

2. Luftfeder (1) nach Anspruch 1, **dadurch gekennzeichnet, dass** der Außendurchmesser (D2) des unteren Abrollkolbens (2) größer ist als der Außendurchmesser (D3) des oberen Abrollkolbens (3).

3. Luftfeder nach einem der Ansprüche 1 oder 2, **dadurch gekennzeichnet, dass** der untere Abrollkolben (2) eine zum Druckluftraum (4) gerichtete Ausnehmung (8) hat, in die der obere Abrollkolben (3) bei starker Einfederung eintauchen kann.

4. Luftfeder nach einem der Ansprüche 1 bis 3, **dadurch gekennzeichnet, dass** der untere Abrollkolben (2) eine zylindrische Außenfläche (10) hat.

5. Luftfeder nach einem der Ansprüche 1 bis 4, **dadurch gekennzeichnet, dass** der obere Abrollkolben (3) einen Abschnitt (33) mit einer zylindrischen Außenfläche und einen daran anschließenden konkaven Sockel (34) hat.

6. Luftfeder nach Anspruch 5, **dadurch gekennzeichnet, dass** der konkave Sockel (34) einen Kreisbogen von mindestens 90°Grad bildet.

7. Luftfeder nach einem der Ansprüche 1 bis 6, **dadurch gekennzeichnet, dass** die Enden (52, 53) des Rollbalgs (5) an den einander zugewandten inneren Rändern (54, 55) der Abrollkolben (2, 3) befestigt sind.

8. Luftfeder nach einem der Ansprüche 1 bis 7, **dadurch gekennzeichnet, dass** der Rollbalg ein Schlauchrollbalg ist.

9. Luftfeder nach Anspruch 8, **dadurch gekennzeichnet, dass** der Schlauchrollbalg (5) konisch vorgeformt ist.

10. Luftfeder nach einem der Ansprüche 1 bis 9, **dadurch gekennzeichnet, dass** die Abrollkolben (2, 3) aus tiefgezogenen Blechen geformt sind.

## Claims

1. Air spring for a vehicle, in particular a utility vehicle, having a lift function, the air spring (1) consisting of two rolling pistons (2, 3) facing one another and a rolling bellow (5) with double rolling folds (6, 7) enclosing a pressurised air chamber (4), **characterised in that** the effective surface areas (WF2 and WF3) of the rolling folds (6, 7) are co-ordinated with one another in such a way that during the dynamic spring action of the air spring (1) over a predetermined spring travel (FW), the pressure-active surface (WF2) of the rolling fold (6) at the lower rolling piston (2) is larger than the pressure-active surface (WF3) of the rolling fold (7) at the upper rolling piston (3); that, when the predetermined full spring deflection of the air spring (1) is reached, the pressure-active surfaces (WF2 and WF3) of the rolling folds (6, 7) are approximately equal in size; and that during the lift procedure the upper rolling fold (7) rolls off at the upper rolling piston (3) following the complete deflection due to increasing the air pressure in the pressurised air space (4) of the air spring (1).

2. Air spring (1) according to claim 1, **characterized in that** the outer diameter (D2) of the lower rolling piston (2) is larger than the outer diameter (D3) of the upper rolling piston (3).

3. Air spring according to one of claims 1 or 2, **characterized in that** the lower rolling piston (2) has a recess (8) directed towards the compressed air chamber (4), into which the upper rolling piston (3) can enter in the event of strong deflection.

4. Air spring according to one of claims 1 to 3, **characterized in that** the lower rolling piston (2) has a cylindrical outer surface (10).

5. Air spring according to one of claims 1 to 4, **characterized in that** the upper rolling piston (3) has a section (33) having a cylindrical outer surface and a concave base (34) adjoining it.

6. Air spring according to claim 5, **characterized in that** the concave base (34) forms a circular arc of at least 90°.

7. Air spring according to one of claims 1 to 6, **characterized in that** the ends (52, 53) of the rolling bellow (5) are fastened to the inner edges (54, 55) of the rolling pistons (2, 3) facing one another.

8. Air spring according to one of claims 1 to 7, **characterized in that** the rolling bellow is a rolling tube bellow.

9. Air spring according to claim 8, **characterized in that** the rolling bellow (5) is conically preformed.

10. Air spring according to one of claims 1 to 9, **characterized in that** the rolling pistons (2, 3) are formed from deep-drawn sheet metal.

## Revendications

1. Ressort pneumatique (1) pour un véhicule, en particulier un véhicule utilitaire, présentant une fonction de levage, dans lequel le ressort pneumatique (1) est composé de deux pistons à déroulement (2, 3) mutuellement opposés et d'un soufflet à enroulement (5) comportant des replis à double enroulement (6, 7) et enfermant une chambre à air comprimé (4),
**caractérisé en ce que**
les surfaces efficaces (WF2 et WF3) des replis à déroulement (6, 7) sont accordés les unes aux autres de telle façon que pendant l'opération de débattement dynamique du ressort pneumatique (1) sur un trajet de débattement prédéterminé (FW) la surface efficace en pression (WF2) du repli à déroulement (6) au niveau du piston à déroulement inférieur (2) est plus grande que la surface efficace pression (WF3) du repli à déroulement (7) au niveau du piston à déroulement supérieur (3), **en ce que** lorsque le débattement total prédéterminé du ressort pneumatique (1) est atteint, les surfaces efficaces en pression (WF2 et WF3) des replis à déroulement (6, 7) sont approximativement de même taille et **en ce que** pendant le processus de levage à la suite du débattement total, par augmentation de pression dans la chambre à air comprimé (4) du ressort pneumatique (1) le repli à déroulement supérieur (7) se déroule sur le piston à déroulement supérieur (3).

2. Ressort pneumatique (1) selon la revendication 1, **caractérisé en ce que** le diamètre extérieur (D2) du piston à déroulement inférieur (2) est plus grand que le diamètre extérieur (D3) du piston à déroulement supérieur (3).

3. Ressort pneumatique selon l'une des revendications 1 ou 2, **caractérisé en ce que** le piston à déroulement inférieur (2) possède un évidement (8) dirigé vers la chambre à air comprimé (4) et dans lequel le piston à déroulement supérieur (3) est capable de plonger lors d'un fort écrasement.

4. Ressort pneumatique selon l'une des revendications 1 à 3, **caractérisé en ce que** le piston à déroulement inférieur (2) a une surface extérieure cylindrique (10).

5. Ressort pneumatique selon l'une des revendications 1 à 4, **caractérisé en ce que** le piston à déroulement supérieur (3) a un tronçon (33) avec une surface extérieure cylindrique et un socle concave (34) qui s'y raccorde.

6. Ressort pneumatique selon la revendication 5, **caractérisé en ce que** le socle concave (34) forme un arc de cercle d'au moins 90°.

7. Ressort pneumatique selon l'une des revendications 1 à 6, **caractérisé en ce que** les extrémités (52, 53) du soufflet à déroulement (5) sont fixées sur les bordures intérieures (54, 55) tournées l'une vers l'autre des pistons à déroulement (2, 3).

8. Ressort pneumatique selon l'une des revendications 1 à 7, **caractérisé en ce que** le soufflet à déroulement est un soufflet à déroulement tubulaire.

9. Ressort pneumatique selon la revendication 8, **caractérisé en ce que** le soufflet à déroulement tubulaire (5) est préalablement formé de manière conique.

10. Ressort pneumatique selon l'une des revendications 1 à 9, **caractérisé en ce que** les pistons à déroulement (2, 3) sont formés à partir de tôles embouties.
